Europäisches Patentamt

**European Patent Office**

**Office européen des brevets**

(19)

(11) Veröffentlichungsnummer: **0 017 737**
A1

(12)

# EUROPÄISCHE PATENTANMELDUNG

(21) Anmeldenummer: **80101015.8**

(22) Anmeldetag: **29.02.80**

(51) Int. Cl.³: **G 01 P 1/11,** G 01 D 7/12

(30) Priorität: **11.04.79 DE 2914740**

(43) Veröffentlichungstag der Anmeldung: **29.10.80**
**Patentblatt 80/22**

(84) Benannte Vertragsstaaten: **AT BE CH FR GB IT NL SE**

(71) Anmelder: **artur fischer forschung, Weinhalde 14 - 18,
D-7244 Waldachtal 3 (Tumlingen) (DE)**

(72) Erfinder: **Fischer, Arthur, Dr. h. c., Weinhalde 34,
D-7244 Waldachtal 3 / Tumlingen (DE)**
Erfinder: **Zimmermann, Klaus, Rubensallee 43,
D-6500 Mainz (DE)**

(74) Vertreter: **Jung, Eugen et al, C/o Artur Fischer
Forschung Weinhalde 14 - 18,
D-7244 Waldachtal 3 (Tumlingen) (DE)**

(54) **Vorrichtung für die Geschwindigkeitsüberwachung insbesondere in der Start- / Landephase von Segel- und Motorflugzeugen.**

(57) Die Erfindung bezieht sich auf eine Vorrichtung, mit der insbesondere in der Lande-/Startphase von Segel- und Motorflugzeugen mit eingebautem Geschwindigkeitsmeßgerät eine permanente Geschwindigkeitsüberwachung möglich ist. Dazu weist die Vorrichtung einen mit dem Geschwindigkeitsmeßgerät gekoppelten Istwertfühler auf und es erfolgt ein Vergleich des Istwertes mit einer Sollwerteingabe. Bei Übereinstimmung und/oder Abweichung des Istwertes von der Sollwerteingabe gibt die Vorrichtung akustische Signale ab.

Vorrichtung für die Geschwindigkeitsüberwachung
insbesondere in der Start- / Landephase von Segel-
und Motorflugzeugen

Die Erfindung betrifft eine Vorrichtung für die Geschwindigkeitsüberwachung insbesondere in der Start- / Landephase von Segel- und Motorflugzeugen mit eingebautem Geschwindigkeitsmeßgerät.

Die Geschwindigkeitsüberwachung in Segel- und Motorflugzeugen erfolgt bislang optisch durch Ablesen der durch die Zeigerstellung angezeigten Geschwindigkeit des Fahrtmessers. Gerade in der Start- / Landephase, in der bestimmte Geschwindigkeiten einzuhalten sind, wäre eine permanente Geschwindigkeitsüberwachung zweckmäßig, die aber durch den bekannten, zum Ablesen zwingenden Fahrtmesser nicht gegeben ist. Beim Starten und Landen muß sich nämlich der Pilot auf die Landebahn konzentrieren, so daß wenig Möglichkeit besteht, die Geschwindigkeit laufend durch Ablesen des Fahrtmessers zu überwachen.

Der Erfindung liegt die Aufgabe zugrunde, eine Vorrichtung zu schaffen, mit der insbesondere in der Lande- / Startphase eine permanente Geschwindigkeitsüberwachung möglich ist.

Erfindungsgemäß wird dies dadurch erreicht, daß die Vorrichtung einen mit dem Geschwindigkeitsmeßgerät gekoppelten Istwertfühler aufweist, daß ein Vergleich des Istwertes mit einer Sollwerteingabe erfolgt, und daß die Vorrichtung bei Übereinstimmung und / oder Abweichung des Istwertes von der Sollwerteingabe akustische Signale abgibt.

Mit dem Istwertfühler wird die tatsächliche Geschwindigkeit des Flugzeuges mit der für den Start bzw. der Landung eingestellten Sollgeschwindigkeit verglichen. Entspricht die gemessene Geschwindigkeit der Sollgeschwindigkeit, wird ein diese Übereinstimmung anzeigendes akustisches Signal abgegeben. Weicht die tatsächliche Geschwindigkeit von der Sollgeschwindigkeit ab, so wird dies durch Veränderung des akustischen Signales angezeigt. Bei einer Abweichung in den unteren Geschwindigkeitsbereich kann dies durch tiefe und bei einer Abweichung in den oberen Geschwindigkeitsbereich durch hohe Töne akustisch dem Piloten angezeigt werden. Durch die erfindungsgemäße Lösung kann sich der Pilot nunmehr beim Start bzw. bei der Landung optisch voll auf die Landebahn konzentrieren bei gleichzeitiger akustischer Überwachung seiner richtigen Lande- bzw. Startgeschwindigkeit.

In einer weiteren Ausgestaltung der Erfindung kann die Sollwerteingabe die Sollgeschwindigkeit, sowie die untere und obere kritische Geschwindigkeitsgrenze umfassen. Durch diese Aufsplittung der Sollwerteingabe und der jeweils entsprechenden Zuordnung von Signalen kann der Pilot akustisch den gesamten für die Landung bzw. Start möglichen Geschwindigkeitsbereich einerseits und die kritischen Grenzen andererseits kontrollieren.

In einer weiteren Ergänzung der Erfindung kann der Abweichungsgrad des Istwertes von der Sollgeschwindigkeit durch sich verstärkende Signalmodulation angezeigt werden. Die analog mit der Abweichung der tatsächlichen Geschwindigkeit von der Sollgeschwindigkeit verknüpfte Signalmodulation verschafft dem Piloten akustisch eine genaue Information zur Korrektur und Annäherung seiner tatsächlichen Geschwindigkeit an die Sollgeschwindigkeit.

Schließlich kann in einer weiteren Ergänzung der Erfindung der Istwertfühler der Vorrichtung an den Fahrtmesser ansetz- und befestigbar, sowie aus drei optischen Reflexlichtschranken gebildet sein, die in einem die Soll- und die Grenzwerte bestimmenden Abstand zueinander angeordnet sind und die auf den Zeiger des Fahrtmessers ansprechen. Diese Gestaltung ermöglicht den nachträglichen Einbau der erfindungsgemäßen Vorrichtung in

- 3 -

Segel- und Motorflugzeuge ohne Veränderung und Ausbau des vorhandenen Fahrtmessers. Um das Ablesen des Fahrtmessers nicht zu behindern, ist es zweckmäßig, das den Istwertfühler aufweisende Gehäuse aus transparentem Material, bspw. Plexiglas, herzustellen.

Schließlich kann der aus den optischen Reflexlichtschranken bestehende Istwertfühler um die Zeigerachse des Fahrtmessers verdrehbar sein. Die Verdrehbarkeit ermöglicht eine Änderung und Einstellung der Sollgeschwindigkeit mit ihrem unteren und oberen Grenzwert. Dies ist dann von Vorteil, wenn durch entsprechende Windverhältnisse die durch den Fahrtmesser angezeigte Eigengeschwindigkeit nicht der wahren Eigengeschwindigkeit entspricht und somit für den Start und die Landung eine Berichtigung der gemessenen Eigengeschwindigkeit erforderlich ist. Durch die Einstellbarkeit des Istwertfühlers auf jeden beliebigen Geschwindigkeitsbereich ist es ferner möglich, auch die gegenüber der Lande- und Startgeschwindigkeit höhere Fluggeschwindigkeit akustisch zu überwachen.

In einer weiteren Gestaltung der Erfindung kann der Istwertfühler durch ein an das Staurohr des Geschwindigkeitsmeßgerätes angekoppelten Tauchspulgeber, Halbleiterfühler oder dgl. gebildet sein. Diese Gestaltung ermöglicht die analoge Feststellung der tatsächlichen Geschwindigkeit, die in Verbindung mit einer speziellen Auswerteschaltung ein der tatsächlichen Geschwindigkeit analoges akustisches Signal ermöglicht.

In der Zeichnung sind Ausführungsbeispiele der Erfindung dargestellt.

Es zeigen:

Figur 1    ein Funktionsschaubild der erfindungsgemäßen Vorrichtung

Figur 2   einen auf den Fahrtmesser aufgesetzten Istwertfühler
in Drauf- und Seitenansicht

Figur 3   das Fahrtmessergehäuse mit eingebautem Tauchspulgeber als Istwertfühler

Figur 4   das Fahrtmessergehäuse mit eingebautem Halbleiter-Istwertfühler

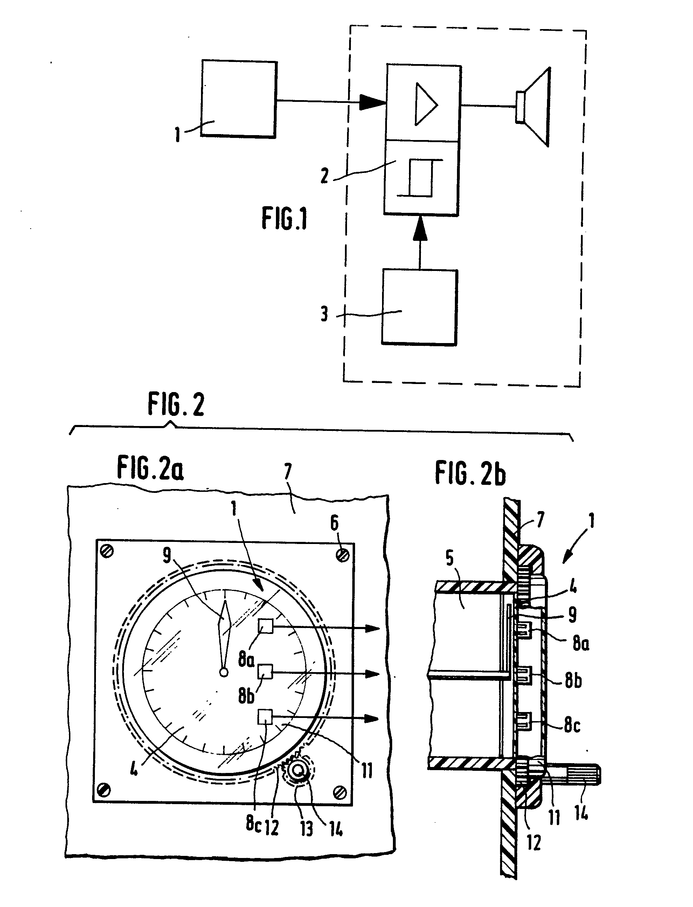

Gemäß dem Funktionsschaubild nach Figur 1 wird mit dem Istwertfühler 1 die mit dem im Flugzeug eingebauten Geschwindigkeitsmeßgerät (Fahrtmesser) gemessene Geschwindigkeit in einen Impuls umsetzt und in einem Auswertgerät 2 mit der eingestellten Sollwerteingabe 3 für die Sollgeschwindigkeit und ggf. dem unteren und oberen Geschwindigkeitsgrenzwert verglichen. Nach entsprechender Verarbeitung und Auswertung erfolgt der Impuls für die Auslösung des akustischen Signales über Tongenerator und Lautsprecher, das der jeweiligen tatsächlichen Geschwindigkeit bzw. Geschwindigkeitsbereich zugeordnet ist. Bei Übereinstimmung mit der Sollgeschwindigkeit kann dies ein Dauerton sein, der bei entsprechender Abweichung in den unteren Geschwindigkeitsbereich in tiefer modulierte und bei Abweichung in den oberen Geschwindigkeitsbereich in höher modulierte Töne übergeht.

Der in Figur 2 dargestellte Istwertfühler 1 ist auf die Sichtscheibe 4 des Fahrtmessers 5 aufgesetzt und mit Schrauben 6 am Cockpit befestigt. Die Feststellung des Istwertes erfolgt über drei optische Reflexlichtschranken 8 a, 8 b, 8 c, die beim Durchfahren des die tatsächliche Geschwindigkeit anzeigenden Fahrtmesserzeigers 9 entsprechende Impulse an das Auswertegerät abgeben. Beim Durchfahren der ersten Reflexlichtschranke 8 a ist die untere kritische Geschwindigkeitsgrenze erreicht, die nach Abgleichung mit der unteren Grenze der Sollwerteingabe das entsprechende akustische Signal auslöst. Durch Geschwindigkeitszunahme wandert der Zeiger 9 zu der die Sollgeschwindigkeit anzeigenden Reflexlichtschranke 8 b, die das akustische Signal für die Übereinstimmung der tatsächlichen Geschwindigkeit mit der eingegebenen Sollgeschwindigkeit auslöst. Die dritte optische Reflexlichtschranke 8 c begrenzt den oberen kritischen Geschwindigkeitsbereich. Das auf den Fahrtmesser aufgesetzte Gehäuse 11 besteht aus transparentem Material, so daß die Anzeige des Fahrtmessers nach wie vor sichtbar ist. Diese die drei optischen Reflexlichtschranken aufweisende Gehäuseteil 11 ist mit einem Zahnkranz 12 versehen, so daß über einen ein Zahnrad 13 aufweisenden Drehknopf 14 eine Verstellmöglichkeit des Istwertfühlers 1, und damit eine Einstellmöglichkeit für die Sollgeschwindigkeit mit dem unteren und oberen Geschwindigkeitsgrenzwert besteht.

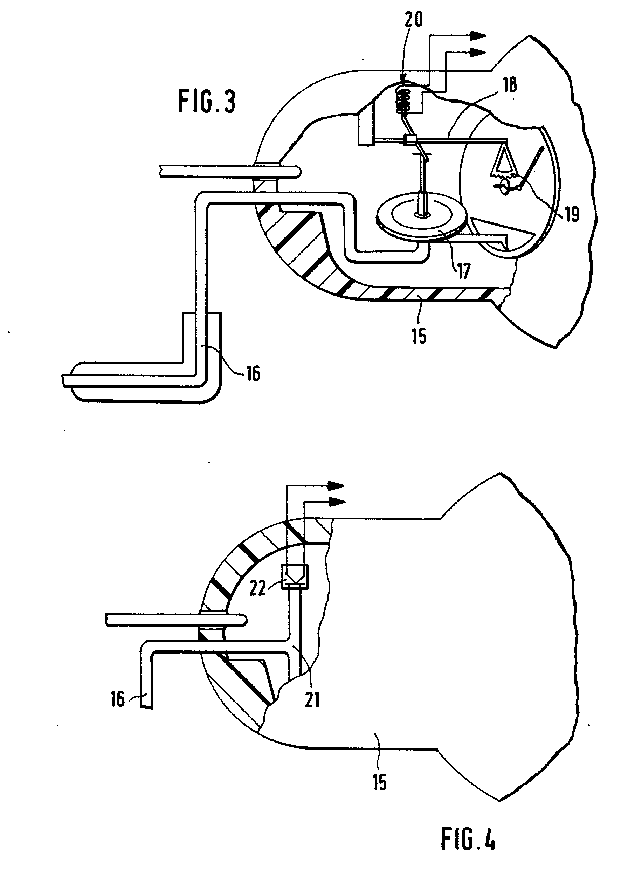

In dem aufgeschnittenen Fahrtmessergehäuse 15 nach Figur 3 sind die bekannten Funktionseinheiten für die Geschwindigkeitsmessung über den Druck im Staurohr 16 dargestellt. Der Staurohrdruck wirkt auf eine Membrandose 17 die über ein Gestänge 18 und Zeigergetriebe 19 den Staurohrdruck in eine Geschwindigkeitsanzeige umsetzt. An dieses Gestänge 18 ist der Kern eines Tauchspulgebers 20 angehängt, so daß sich in Abhängigkeit von dem Staudruck und damit von der Geschwindigkeit eine entsprechende Eintauchtiefe des Kerns in den Tauchspulgeber ergibt. Diese direkt im Zusammenhang mit der Geschwindigkeit stehende Eintauchtiefe des Kerns ergibt über den Tauchspulgeber 20 den Istwert, der entsprechend dem Funktionsschaubild nach Figur 1 wiederum mit der Sollwerteingabe verglichen wird und zu den entsprechenden akustischen Signalen führt. Diese analoge Istwertfühlung ermöglicht es, die Abweichung von der Sollgeschwindigkeit durch analoge Veränderung des akustischen Signals anzuzeigen.

Die gleiche Möglichkeit bietet sich auch mit der Lösung nach Figur 4, bei der der Staudruck über eine Staurohrabzweigung 21 unmittelbar auf einen Halbleiterfühler 22 einwirkt, der ebenfalls analog zur Geschwindigkeit einen entsprechenden Impuls an das Auswertgerät abgibt.

0017737

artur fischer forschung                    den 06. April 1979
                                           Ju/Woe

- 1 -

EP 3006

P a t e n t a n s p r ü c h e

1.  Vorrichtung für die Geschwindigkeitsüberwachung insbesondere in der Lande- / Startphase von Segel- und Motorflugzeugen mit eingebautem Geschwindigkeitsmeßgerät, dadurch
    gekennzeichnet,

    - daß die Vorrichtung einen mit dem Geschwindig-
      keitsmeßgerät gekoppelten Istwertfühler auf-
      weist,
    - daß ein Vergleich des Istwertes mit einer Sollwerteingabe erfolgt,
    - und. daß die Vorrichtung bei Übereinstimmung und
      / oder Abweichung des Istwertes von der Sollwerteingabe akustische Signale abgibt.

2.  Vorrichtung nach Anspruch 1, dadurch gekennzeichnet, daß
    die Sollwerteingabe die Sollgeschwindigkeit sowie die untere und obere kritische Geschwindigkeitsgrenze umfaßt.

- 2 -

3. Vorrichtung nach Anspruch 1 und 2 dadurch gekennzeichnet, daß der Abweichungsgrad des Istwertes von der Sollgeschwindigkeit durch sich verstärkende Signalmodulation angezeigt wird.

4. Vorrichtung nach Anspruch 1, dadurch gekennzeichnet, daß der Istwertfühler an den Fahrtmesser ansetz- und befestigbar ist, sowie aus drei optischen Reflexlichtschranken gebildet ist, die in einem die Soll- und die Grenzwerte bestimmenden Abstand zueinander angeordnet sind, und die auf den Zeiger des Fahrtmessers ansprechen.

5. Vorrichtung nach Anspruch 1 und 4, dadurch gekennzeichnet, daß der aus den optischen Reflexlichtschranken bestehende Istwertfühler um die Zeigerachse des Fahrtmessers verdrehbar ist.

6. Vorrichtung für die Geschwindigkeitsüberwachung insbesondere in der Lande- / Startphase von Segel- und Motorflugzeugen, deren Geschwindigkeitsmessung über den in einem Staurohr sich aufbauenden Druck erfolgt, insbesondere nach Anspruch 1, dadurch gekennzeichnet, daß der Istwertfühler durch ein an das Staurohr des Geschwindigkeitsmeßgerätes angekoppelten Tauchspulgeber, Halbleiterfühler oder dgl. gebildet ist.

FIG.1

FIG. 2

FIG.2a

FIG. 2b

FIG.3

FIG.4

**Europäisches Patentamt**

# EUROPÄISCHER RECHERCHENBERICHT

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | DE - A - 1 448 943 (SIEMENS AG) <br> * Seite 6, Zeile 1 bis Seite 7, Zeile 2; Figur 1 * <br><br> -- | 1,2 | G 01 P 1/11 <br> G 01 D 7/12 |
| | US - A - 3 490 295 (WESTBY et al) <br> * Spalte 4, Zeilen 1-37; Figuren 1-3 * <br><br> -- | 1,2,5 | |
| A | US - A - 2 805 410 (COLT) <br> * Spalte 1, Zeilen 29-47; Figur 1 * <br><br> -- | 1,2 | RECHERCHIERTE SACHGEBIETE (Int. Cl. ³) |
| | DE - A - 2 422 494 (BREUER) <br> * Seite 2; Figuren 1,2 * <br><br> -- | 1,2,5 | G 01 P 1/08 <br> 1/10 <br> 1/11 <br> G 01 D 7/12 <br> B 64 D 43/02 |
| | US - A - 3 400 581 (BOSTWICK) <br> * Spalte 3, Zeile 69 bis Spalte 4, Zeile 2; Figur 2 * <br><br> -- | 1,3 | |
| | DE - A - 2 454 203 (HOLLAND) <br> * Ansprüche 1-3; Figur 2 * <br><br> -- | 1,5 | KATEGORIE DER GENANNTEN DOKUMENTE |
| | US - A - 2 771 597 (FREEDMAN) <br> * Spalte 1, Zeilen 50-68; Figuren 1,2 * <br><br> -- | 1,5 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument |
| | GB - A - 1 073 394 (BENDIX) <br> ./. | 1,6 | L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 17-07-1980 | HANSEN |

EPA form 1503.1 06.78

# EUROPÄISCHER RECHERCHENBERICHT

Europäisches Patentamt

Nummer der Anmeldung

EP 80 10 1015
-2-

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | * Seite 2, Zeilen 96-106; Figur 1 *<br><br>---- | | |
| | | | RECHERCHIERTE SACHGEBIETE (Int. Cl. 3) |